# EUROPÄISCHE PATENTSCHRIFT

(11) **EP 0 699 377 B1**
(45) Veröffentlichungstag und Bekanntmachung des Hinweises auf die Patenterteilung: **20.10.1999**
(21) Anmeldenummer: 95107893.0
(22) Anmeldetag: 24.05.1995
(51) Int. Cl.: A01C 15/00, A01C 17/00

(54) **Schleuderdüngerstreuer**
Broadcaster
Epandeur d'engrais

(30) Priorität: 03.09.1994 DE 4431509
(43) Veröffentlichungstag der Anmeldung: 06.03.1996
(73) Patentinhaber: Amazonen-Werke H. Dreyer GmbH & Co. KG, 49205 Hasbergen (DE)
(72) Erfinder: Walter, Achim, D-49078 Osnabrück (DE)

(56) Entgegenhaltungen:
- Keine einschlägigen Dokumente gefunden

## Beschreibung

Die Erfindung betrifft einen Schleuderdüngerstreuer gemäß des Oberbegriffes des Patentanspruches 1.

Ein derartiger Schleuderstreuer ist durch die deutsche Offenlegungsschrift 40 08 736 bekannt. Dieser Schleuderdüngerstreuer weist einen Grenzstreuschirm auf, der über eine Fernbedienungseinrichtung, die als Hydraulikzylinder oder elektrischer Stellmotor ausgebildet ist, in eine Betriebsstellung und in eine Außerbetriebsstellung verschwenkbar ist. Die Fernbedienungseinrichtung wird über ein Bedienungselement separat betätigt.

Der Erfindung liegt die Aufgabe zugrunde, die Betätigung der Fernbedienungseinrichtung für den Grenzstreuschirm zu vereinfachen.

Diese Aufgabe wird erfindungsgemäß durch die kennzeichnende Maßnahme des Anspruches 1 gelöst. Infolge dieser Maßnahme ist kein zusätzliches Bedienungselement erforderlich, um die Fernbedienungseinrichtung für den Grenzstreuschirm zu betätigen. Vielmehr wird in vorteilhafter und überraschend einfacher Weise die Fernbedienungseinrichtung für den Streuschirm durch Betätigen der Betätigungselemente für die Schieber in die Betriebsstellung bzw. die Außerbetriebsstellung betätigt.

Vorteilhafte Ausgestaltung der Fernbedienungseinrichtung für den Grenzstreuschirm sind den Unteransprüchen und der Beispielsbeschreibung sowie den Zeichnungen zu entnehmen. Hierbei zeigen
- Fig. 1: einen an einen Ackerschlepper angebauten Schleuderdüngerstreuer mit Grenzstreuschirm in Seitenansicht,
- Fig. 2: den Schleuderdüngerstreuer mit Grenzstreuschirm in der Ansicht von hinten in vergrößertem Maßstab,

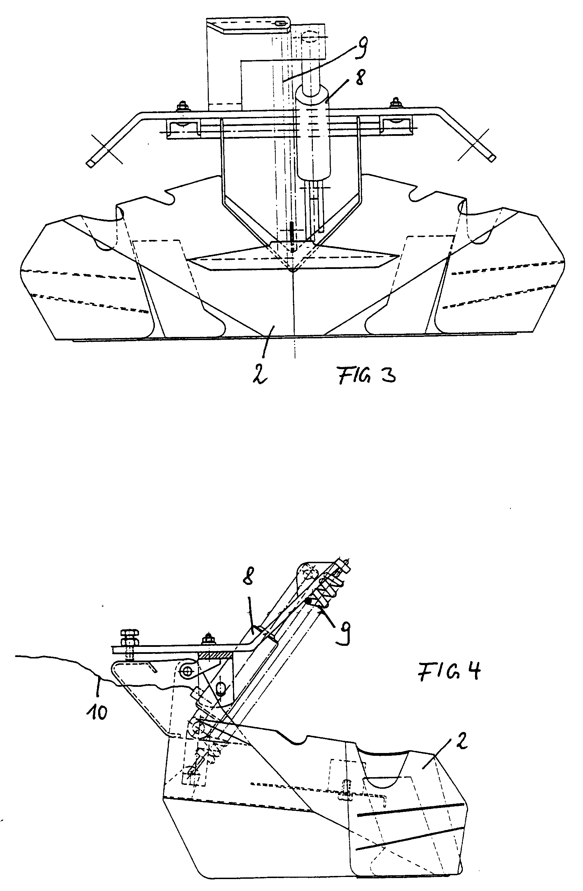

- Fig. 3: den Grenzstreuschirm in der Ansicht von hinten in vergrößertem Maßstab,
- Fig. 4: den Grenzstreuschirm in der Seitenansicht,
- Fig. 5: einen Schaltplan für die Betätigung der Schieber und des Grenzstreuschirms
- Fig. 6: einen weiteren Schaltplan,
- Fig. 7: einen weiteren Schaltplan,
- Fig. 8: einen weiteren Schaltplan und
- Fig. 9: einen weiteren Schaltplan.

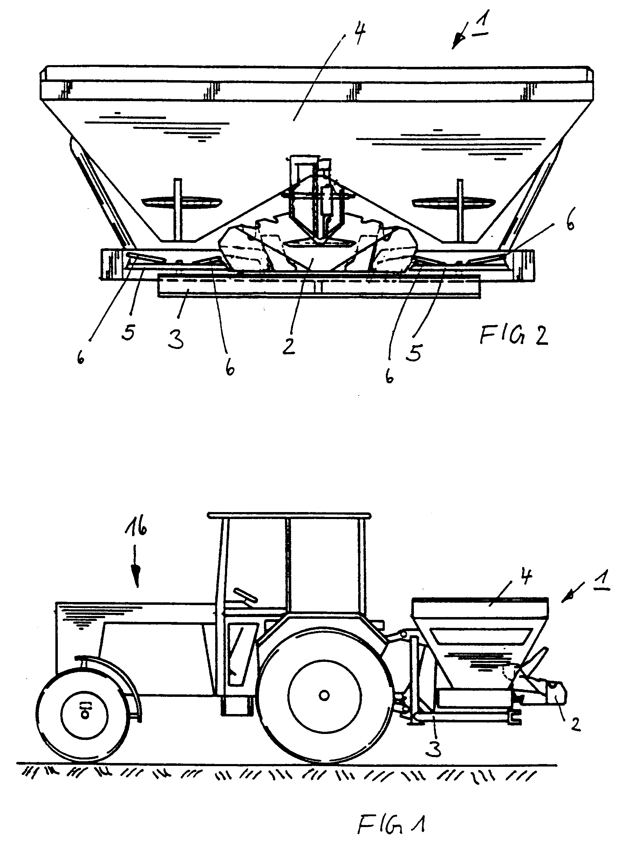

Auf der Rückseite des Schleuderdüngerstreuers 1 ist der Grenzstreuschirm 2 angeordnet. Der Schleuderdüngerstreuer 1 weist den Rahmen 3 und den Vorratsbehälter 4 auf. Im unteren Bereich des Vorratsbehälters 4 sind Dosierorgane angeordnet, welche in einstellbarer Weise den darunter angeordneten Schleuderscheiben 5 die Düngemittel zuführen. Die Dosierorgane sind in bekannter und daher nicht näher dargestellter Weise als über Schieber verschließbare und in ihrer Öffnungsbreite einstellbare Auslauföffnungen ausgebildet. Die Schieber werden über nicht dargestellte und mit einer Zugfeder zusammenwirkende Hydraulikzylinder betätigt. Die Hydraulikzylinder sind über eine Leitung an die Hydraulikanlage des Schleppers angeschlossen, wie weiter unten erläutert wird. Die Schleuderscheiben 5 weisen Wurfschaufeln 6 auf. Die Schleuderscheiben 5 werden rotierend angetrieben und schleudern die Düngemittelpartikel über einen vorbestimmten Bereich ab. Während des Normalstreuens befindet sich der Grenzstreuschirm 2 in nach oben geschwenkter Position. In der in Fig. 1 und 2 eingezeichneten Position ist der Grenzstreuschirm 2 nach unten verstellt und befindet sich in Grenzstreuposition.

Der Grenzstreuschirm 2 ist als beidseitig wirkender Grenzstreuschirm ausgebildet, so daß wahlweise sowohl eine links wie auch eine rechts vom Schleuderstreuer 1 liegende Feldrandgrenze exakt nach den gesetzlichen Vorschriften bestreut werden kann. Der Grenzstreuschirm 2 ist mittels der Schwenkhalterung am Rahmen 3 des Schleuderstreuers 1 angelenkt. Über die aus dem Hydraulikzylinder 8 und der Feder 9 bestehenden Fernbedienungseinrichtung wird der Grenzstreuschirm 2 in die dargestellte Betriebsposition geschwenkt. Durch die Zugfeder 9 wird der Grenzstreuschirm 2, wenn das Betätigungsventil für den Hydraulikzylinder 8 auf 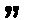 freien Durchfluß" gestellt ist, nach oben in die Außerbetriebsstellung geschwenkt.

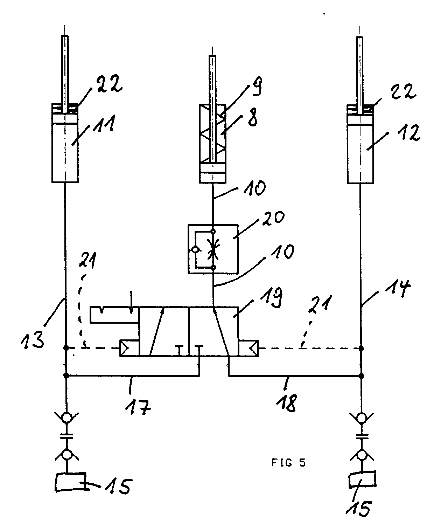

Wie die Fig. 5 zeigt, ist die den Hydraulikzylinder 8 für den Grenzstreuschirm 2 betätigende Leitung 10 an die als Hydraulikzylinder 11 und 12 ausgebildeten Betätigungselemente für die Schieber angeschlossen.

Über die Leitungen 13 und 14 sind die Hydraulikzylinder 11 und 12, die die Schieber betätigen, an die Hydraulikanlage 15 und jeweils an ein eigenes Betätigungsventil der Hydraulikanlage 15 des Schleppers 16 angeordnet, so daß die beiden Schieber des Schleuderdüngerstreuer 1 getrennt betätigt werden können.

Von den Leitungen 13 und 14 zweigt jeweils eine Abzweigungsleitung 17 und 18 ab, die an ein hydraulisch vorgesteuertes 3/2 Wegeventil 19 mit Rasterung angeschlossen sind. Desweiteren ist an dieses 3/2 Wegeventil 19 eine zu dem den Grenzstreuschirm 2 betätigenden Hydraulikzylinder 8 führenden Leitung 10 angeschlossen. In dieser Leitung 10 ist ein Drosselrückschlagventil 20, welches vorzugsweise einstellbar ist, angeordnet. Desweiteren ist das 3/2 Wegeventil 19 über Steuerleitungen 21 mit den beiden Leitungen 13 und 14 verbunden, so daß über diese Steuerleitungen 21 das 3/2 Wegeventil 19 umgeschaltet wird.

Die Funktionsweise der Schaltung ist folgende:

Wenn halbseitiges Grenzstreuen durchgeführt werden soll, daß heißt, wenn nur einer der beiden Schleuderscheiben 5 Dünger zugeführt wird, so daß der Dünger praktisch nicht über die Feldgrenze hinausgeworfen werden soll. In diesem Falle muß der Grenzstreuschirm 2 nach unten geklappt werden. In dem beschriebenen Fall gemäß Fig. 5 soll der dem Hydraulikzylinder 11 zugeordnete Schieber geöffnet werden. Um nun den Grenzstreuschirm 2 in die Betriebsstellung zu bringen wird das dem Hydraulikzylinder 12 zugeordnete und nicht dargestellte Ventil der Hydraulikanlage 15 des Schleppers 16 betätigt, so daß die zu dem Hydraulikzylinder 12 führende Leitung 14 mit Druck beaufschlagt wird. Hierdurch wird das Ventil in die in Fig. 5 dargestellte Schaltposition geschaltet und gleichzeitig strömt über die Abzweigleitung 18 durch das 3/2 Wegeventil 19, das Drosselrückschlagventil 20 Öl zu dem den Grenzstreuschirm 2 betätigenden Zylinder 8. Gegen die Kraft der Feder 9 wird der Grenzstreuschirm 2 in die in Fig. 1 und 2 dargestellte Grenzstreuposition abgesenkt. Anschließend wird durch in Entlastungsstellung schalten des dem Hydraulikzylinder 11 zugeordneten Ventils der Schlepperhydraulikanlage 15 erreicht, daß der Schieber durch die Feder 22 in Öffnungsstellung gezogen wird, so daß Dünger der Schleuderscheibe 5 zugeführt wird. Wenn das halbseitige Grenzstreuen beendet ist und mit voller Arbeitsbreite gestreut werden soll, werden beide Schlepperventile der Hydraulikanlage 15, die den Hydraulikzylindern 11 und 12 zugeordnet sind, in Entlastungsstellung geschaltet, so daß die Federn 22 die Schieber aufziehen. Gleichzeitig zieht die Feder 9 den Grenzstreuschirm 2 nach oben und der Hydraulikzylinder 8 fährt ein. Das zurückströmende Öl kann über das Rückschlagventil des Drosselrückschlagventils 20 und dem 3/2 Wegeventil 19 in die Hydraulikanlage 15 des Schleppers zurückfließen.

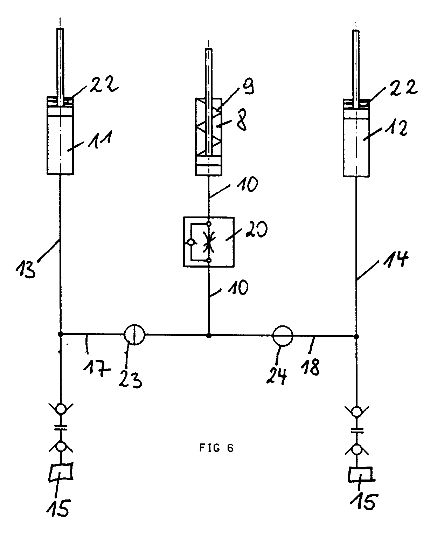

Die Fig. 6 zeigt eine andere Betätigung der Hydraulikzylinder 8, 11 und 12 für die Schieber und den Grenzstreuschirm 2. Anstelle des 3/2 Wegeventils sind hier in die Abzweigleitungen 17 und 18 Absperrhähne 23 und 24 eingesetzt. Wenn wiederum beim Grenzstreuen nur über dem den Hydraulikzylinder 11 zugeordneten Schieber der zugeordneten Schleuderscheibe 5 Düngemittel zugeführt werden soll, wird der Absperrhahn 23 in die in Fig. 6 dargestellte Absperrposition geschaltet. Der andere Absperrhahn 24, der in der anderen Abzweigleitung 18 angeordnet ist, wird auf Durchfluß geschaltet, so daß durch Betätigen des der Leitung 14 zugeordneten Schlepperventils Drucköl durch den Absperrhahn 24 und das Drosselrückschlagventil 20 in den Hydraulikzylinder 8 strömen kann, so daß über den Hydraulikzylinder 8 der Grenzstreuschirm 2 in die in Fig. 1 dargestellte Grenzstreuposition abgesenkt wird. Durch in Entlastungsstellung schalten des der Leitung 14 zugeordneten Schlepperventils kann Öl aus dem Hydraulikzylinder 8 über das Rückschlagventil des Drosselrückschlagventils 20 in die Hydraulikanlage zurückfließen und die Feder 9 kann so den Grenzstreuschirm 2 in Außerbetriebsstellung anheben. Für das normale Streuen werden, wenn der Grenzstreuschirm 2 sich in Außerbetriebsstellung befindet, beide Absperrhähne 23 und 24 in Absperrstellung geschaltet, so daß die Ölzufuhr zu dem den Grenzstreuschirm 2 betätigenden Hydraulikzylinder 8 abgesperrt ist.

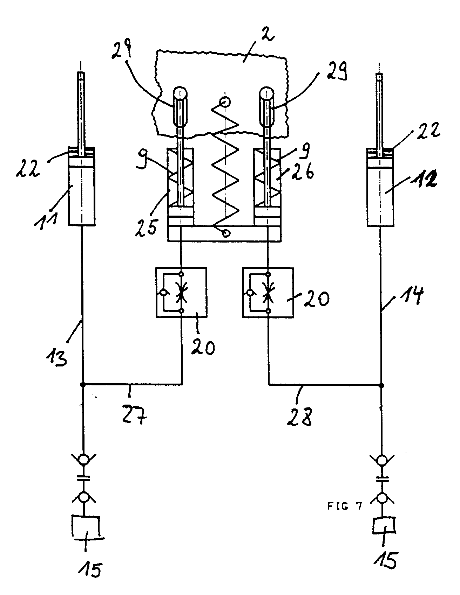

Die Fig. 7 zeigt eine weitere Schaltungsmöglichkeit, wobei hier sowohl auf die Absperrhähne wie auch auf das hydraulisch vorgesteuerte 3/2 Wegeventil verzichtet worden ist. Hierzu ist es dann jedoch erforderlich, zur Betätigung des Grenzstreuschirm 2 zwei Hydraulikzylinder 25, 26 vorzusehen, wobei jeweils ein Hydraulikzylinder 25, 26 über eine Abzweigleitung 27, 28 mit dem jeweils einen Schieber betätigenden Hydraulikzylinder 11, 12 verbunden ist. In jeder Abzweigleitung 27, 28 ist wiederum ein Drosselrückschlagventil 20 angeordnet. Desweiteren sind die Hydraulikzylinder 25, 26 mit einer Langlochführung 29 am Grenzstreuschirm 2 befestigt, so daß eine störungsfreie Betätigung des Grenzstreuschirms 2 möglich ist.

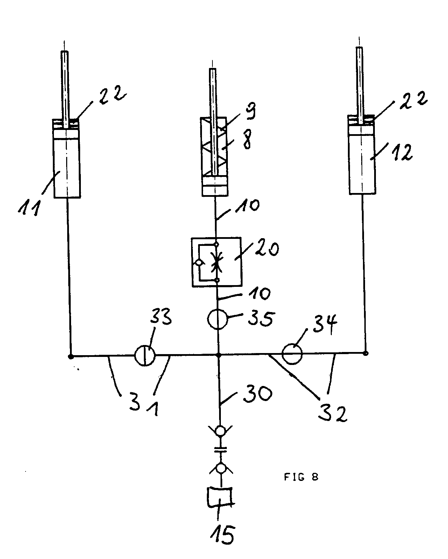

Die Fig. 8 zeigt eine weitere Betätigungsmöglichkeit der Hydraulikzylinder 11 und 12 für die Schieber und den Grenzstreuschirm 2. Die Hydraulikzylinder 11 und 12 zur Betätigung der Schieber und des Grenzstreuschirms 2 sind über die Leitung 30 an ein einziges Schlepperventil der Hydraulikanlage 15 angeschlossen. Um dennoch ein einseitiges Streuen und eine getrennte Betätigung des Schiebers erreichen zu können, sind die jeweils in der zu einem die die Schieber betätigenden Hydraulikzylinder 11 und 12 führenden Leitungen 31 und 32 Absperrhähne 33 und 34 angeordnet. In der in Fig. 8 dargestellten Schaltposition ist die Ölzufuhr zu dem Hydraulikzylinder 11 abgesperrt, so daß nur der den Schieber betätigende Hydraulikzylinder 12 betätigbar ist. Desweiteren ist in der zu dem den Grenzstreuschirm 2 betätigenden Leitung 10 ein weiterer Absperrhahn 35 angeordnet. Wenn die zu dem Schieber 2 führende Leitung 32 mit Drucköl beaufschlagt wird, fließt gleichzeitig durch den Absperrhahn 35 und das einstellbare Drosselrückschlagventil 20 Drucköl zu dem den Streuschirm 2 betätigenden Hydraulikzylinder 8, so daß der Grenzstreuschirm 2 in Arbeitsposition abgesenkt wird. Wenn der Grenzstreuschirm 2 sich in Arbeitsposition befindet, wird der Absperrhahn 35 in Absperrstellung gebracht, so daß kein Öl aus dem den Grenzstreuschirm 2 betätigenden Zylinder 8 zurückfließen kann, wenn durch Betätigen des Schlepperventils Öl aus dem den Schieber betätigenden Zylinder 12 zurückfließt. Um den Grenzstreuschirm 2 wieder in Außerbetriebsstellung zu bringen, wird der Absperrhahn 35 wieder in der eingezeichneten Durchflußstellung gebracht.

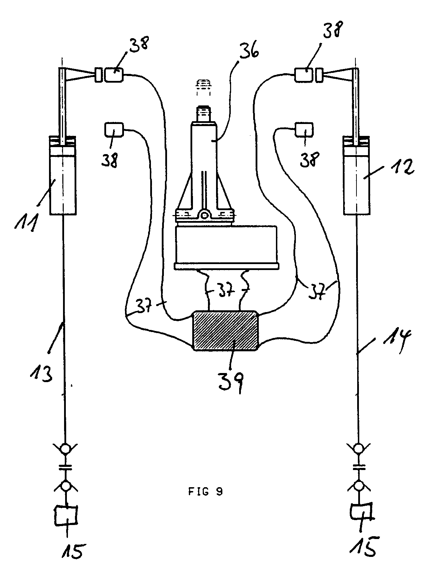

Die Fig. 9 zeigt eine weitere Schaltanordnung für die Betätigung des Betätigungselements 36 des Grenzstreuschirm 2. Bei diesem Ausführungsbeispiel ist das Betätigungselement 36 als elektrischer Stellmotor ausgebildet. Wobei der Stellmotor 36 über Leitungen 37 mit Sensoren 38 verbunden ist, die den Schiebern oder den Schiebern betätigenden Stellelementen 11 und 12 zugeordnet sind. Je nach Stellung des Schiebers erhält der Stellmotor 36 Schaltimpulse durch die in dem Schaltkasten 39 enthaltenen Schaltung, so daß entsprechend der gewünschten Arbeitsweise der Grenzstreuschirm 2 in Arbeitsposition abgesenkt oder in Außerbetriebsstellung angehoben wird.

## Patentansprüche

1. Schleuderdüngerstreuer mit einem Streuschirm (2), insbesondere Grenzstreuschirm (2), und mit über Schieber verschließbare und in ihrer Öffnungsweite einstellbare Auslauföffnungen, wobei die Schieber über an eine Betätigungsanlage mittels Leitungen angeschlossenem Betätigungselement (11, 12) betätigbar sind, wobei der Grenzstreuschirm (2) über eine Fernbedienungseinrichtung (8, 9, 36) in Streuposition und in eine Außerbetriebstellung bringbar ist, dadurch gekennzeichnet, daß die den Streuschirm (2) verstellbare Fernbedienungseinrichtung (8, 9, 36) über eine Leitung (10, 37) mit den den Schieber betätigenden Betätigungselement (11, 12) verbunden ist, so daß der Grenzstreuschirm (2) gemeinsam mit dem Schieber betätigbar ist.

2. Schleuderdüngerstreuer nach Anspruch 1, dadurch gekennzeichnet, daß die Betätigungselemente für die Schieber und die Fernbedienungseinrichtung jeweils als Hydraulikzylinder (8, 11, 12, 26) ausgebildet sind.

3. Schleuderdüngerstreuer nach Anspruch 1, dadurch gekennzeichnet, daß der den Schirm (2) betätigende Hydraulikzylinder (8, 26) über ein Drosselrückschlagventil (20) an die zu dem Schieber betätigenden Hydraulikzylinder (11, 12) führende Leitung (13, 14) angeschlossen ist.

4. Schleuderdüngerstreuer nach einem oder mehreren der vorstehenden Ansprüche, dadurch gekennzeichnet, daß die Betätigungsanlage die Hydraulikanlage (15) des Schleppers ist.

5. Schleuderdüngerstreuer nach einem oder mehreren der vorstehenden Ansprüche, dadurch gekennzeichnet, daß die Fernbedienungseinrichtung für den Grenzstreuschirm (2) als Hydraulikzylinder (8, 26) ausgebildet ist, daß der Hydraulikzylinder (8, 26) durch die Betätigungselemente (11, 12) für die Schieber Schaltimpulse erhält.

6. Schleuderdüngerstreuer nach einem oder mehreren der vorstehenden Ansprüche, dadurch gekennzeichnet, daß jeder einen Schieber betätigende Hydraulikzylinder (11, 12) über eine Leitung (13, 14) an ein Steuerventil der Hydraulikanlage (15) angeschlossen ist, daß an der von dem Steuerventil zu dem die Schieber betätigenden Hydraulikzylinder (13, 14) führende Leitung eine Abzweigleitung (17, 18) angeschlossen ist, die an ein hydraulisch vorgesteuertes 3/2 Wegeventil (19) mit Rasterung angeschlossen ist, daß an das 3/2 Wegeventil (19) die zu dem Grenzstreuschirm (2) betätigende Hydraulikzylinder (8) führende Leitung (10) angeschlossen ist.

7. Schleuderdüngerstreuer nach einem oder mehreren der vorstehenden Ansprüche, dadurch gekennzeichnet, daß die Fernbedienungseinrichtung für den Grenzstreuschirm (2) als elektrischer Stellmotor (36) oder Stellelement ausgebildet ist, daß der Stellmotor (36) durch die Betätigungselemente (11, 12) für die Schieber Schaltimpulse erhält.

## Claims

1. Centrifugal fertilizer broadcaster provided with a broadcasting screen (2), more especially a broadcasting limiting screen (2), and with outlet apertures, which are closable via slides and adjustable in respect of their width of opening, the slides being actuatable via actuating member (11, 12), which communicates with an actuating system by means of lines, the broadcasting limiting screen (2) being able to be brought into the broadcasting position and into an inoperative position via a remote control device (8, 9, 36), characterised in that the remote control device (8, 9, 36), which can adjust the broadcasting screen (2), is connected to the actuating member (11, 12), which actuates the slide, via a line (10, 37), so that the broadcasting limiting screen (2) is jointly actuatable with the slide.

2. Centrifugal fertilizer broadcaster according to claim 1, characterised in that the actuating members for the slides and the remote control device are each hydraulic cylinders (8, 11, 12, 26).

3. Centrifugal fertilizer broadcaster according to claim 1, characterised in that the hydraulic cylinder (8, 26), which actuates the screen (2) communicates with the line (13, 14), which extends to the slide-actuating hydraulic cylinder (11, 12), via a throttle-type non-return value (20).

4. Centrifugal fertilizer broadcaster according to one or more of the preceding claims, characterised in that the actuating system is the hydraulic system (15) of the tractor.

5. Centrifugal fertilizer broadcaster according to one or more of the preceding claims, characterised in that the remote control device for the broadcasting limiting screen (2) is a hydraulic cylinder (8, 26), and in that the hydraulic cylinder (8, 26) receives switching pulses through the actuating members (11, 12) for the slides.

6. Centrifugal fertilizer broadcaster according to one or more of the preceding claims, characterised in that each hydraulic cylinder (11, 12), which actuates a slide, communicates with a control valve of the hydraulic system (15) via a line (13, 14), in that a branch line (17, 18) communicates with the line extending from the control valve to the hydraulic cylinder (13, 14), which actuates the slides, and said branch line communicates with an hydraulically Precontrolled 3/2 directional valve (19) having a scanning means, and in that the line (10), which extends to the hydraulic cylinder (8) actuating broadcasting limiting screen (2), communicates with the 3/2 directional valve (19).

7. Centrifugal fertilizer broadcaster according to one or more of the preceding claims, characterised in that the remote control device for the broadcasting limiting screen (2) is an electric setting motor (36) or setting means, and in that the setting motor (36) receives switching pulses through the actuating members (11, 12) for the slides.

## Revendications

1. Epandeur centrifuge d'engrais comprenant un écran d'épandage (2), notamment un écran d'épandage en limite de champ (2) et les orifices de sortie de degré d'ouverture réglable par les tiroirs qui peuvent les fermer,
les tiroirs étant actionnés par des éléments d'actionnement (11, 12) reliés par des conduites à une installation d'actionnement,
l'écran d'épandage en limite (2) pouvant être mis par une installation de télécommande (8, 9, 36) en position d'épandage ou en position de repos,
caractérisé en ce que
l'installation de télécommande (8, 9, 36) qui actionne l'écran d'épandage (2) est reliée par une conduite (10, 37) à l'élément de manoeuvre (11, 12) actionnant les tiroirs pour que l'écran d'épandage en limite (2) soit actionné en même temps que le tiroir.

2. Epandeur centrifuge d'engrais selon la revendication 1,
caractérisé en ce que
les éléments de manoeuvre des tiroirs et l'installation de télécommande sont réalisés chacun sous la forme de vérins hydrauliques (8, 11, 12, 26).

3. Epandeur centrifuge d'engrais selon la revendication 1,
caractérisé en ce que
le vérin hydraulique (8, 26) actionnant l'écran (2) est relié par un clapet antiretour d'étranglement (20) est relié par une conduite (13, 14) reliée aux vérins hydrauliques (11, 12) actionnant le tiroir.

4. Epandeur centrifuge d'engrais selon une ou plusieurs des revendications précédentes,
caractérisé en ce que
l'installation d'actionnement est le circuit hydraulique (15) du tracteur.

5. Epandeur centrifuge d'engrais selon une ou plusieurs des revendications précédentes,
caractérisé en ce que
l'installation de télécommande de l'écran d'épandage en limite (2) est un vérin hydraulique (8, 26) et ce vérin hydraulique (8, 26) reçoit des impulsions de commande des éléments d'actionnement (11, 12) des tiroirs.

6. Epandeur centrifuge d'engrais selon une ou plusieurs des revendications précédentes,
caractérisé en ce que
chaque vérin hydraulique (11, 12) actionnant un tiroir est relié par une conduite (13, 14) à une vanne de commande de l'installation hydraulique (15),
la conduite reliant la vanne de commande aux vérins hydrauliques (13, 14) actionnant les tiroirs, comporte une dérivation (17, 18) reliée à un distributeur à tiroirs à 3/2 voies (19) à commande hydraulique avec des positions prédéfinies,
la conduite (10) reliée au vérin hydraulique (8) actionnant l'écran d'épandage en limite (2) étant reliée à ce distributeur à tiroirs (19).

7. Epandeur centrifuge d'engrais selon une ou plusieurs des revendications précédentes,
caractérisé en ce que
l'installation de télécommande de l'écran d'épandage en limite (2) est un élément d'actionnement ou un actionneur à moteur électrique (36) et le moteur (36) reçoit des impulsions de commutation par les éléments d'actionnement (11, 12) des tiroirs.
